# EUROPÄISCHE PATENTSCHRIFT

(11) **EP 2 470 607 B1**
(45) Veröffentlichungstag und Bekanntmachung des Hinweises auf die Patenterteilung: **14.12.2016**
(21) Anmeldenummer: 10742830.2
(22) Anmeldetag: 16.08.2010
(51) Int. Cl.: C09D 4/06, C08K 5/00, C09D 167/00

(54) **BESCHICHTUNGSMITTEL, ENTHALTEND UNGESÄTTIGTE POLYESTERHARZE UND VINYLETHER**
COATING MATERIAL COMPRISING UNSATURATED POLYESTER RESINS AND VINYL ETHERS
AGENTS DE REVÊTEMENT CONTENANT DES RÉSINES DE POLYESTER INSATURÉ ET DES ÉTHER VINYLIQUES

(30) Priorität: 26.08.2009 EP 09168667
(43) Veröffentlichungstag der Anmeldung: 04.07.2012
(73) Patentinhaber: BASF SE, 67056 Ludwigshafen am Rhein (DE)
(72) Erfinder: FIES, Matthias, 76829 Landau (DE); POTH, Ulrich, 48163 Münster (DE); BREMSER, Wolfgang, 33100 Paderborn (DE); SEEWALD, Oliver, 33098 Paderborn (DE)
(74) Vertreter: BASF IP Association
(86) Internationale Anmeldenummer: PCT/EP2010/061899
(87) Internationale Veröffentlichungsnummer: WO 2011/023583

(56) Entgegenhaltungen:
- GB-A- 974 892
- US-A- 3 347 806
- US-A- 5 942 556
- US-B1- 6 489 406
- US-B1- 6 617 417

## Beschreibung

Die vorliegende Erfindung betrifft eine Verwendung gemäß Ansprüche 1 bis 15 einer bei Normalbedingungen (20°C, 1 bar) flüssigen Zusammensetzung als Beschichtungsmittel, welche dadurch gekennzeichnet ist, dass die Zusammensetzung
a) eine ungesättigtes Polyesterharz, aufgebaut aus α-olefinisch ungesättigten Polycarbonsäuren, Polyolen und gegebenenfalls weiteren Verbindungen
b) Verbindungen mit Vinylethergruppen (kurz Vinylether) und
c) Maleinsäure, Maleinsäuremonoester oder Maleinsäürediester
enthält, wobei
die Summe der Doppelbindungen der α-olefinisch ungesättigten Polycarbonsäuren aus a) und gegebenenfalls der Verbindungen c) zu den Doppelbindungen der Vinylether b) im Molverhältnis 1,3 : 1 bis 0,8 : 1 steht.

Lösemittelfreie, strahlungshärtbare Beschichtungsmassen auf Basis ungesättigter Polyesterharze enthalten häufig Reaktivverdünner. Reaktivverdünner dienen als Lösemittel für das Polyesterharz und/oder zum Einstellen einer gewünschten Viskosität. Als Reaktivverdünner in Kombination mit ungesättigten Polyesterharzen sind z. B. Styrol oder (Meth)acrylmonomere bekannt.

Die Löslichkeit der Polyesterharze in Styrol oder (Meth)acrylestern ist häufig begrenzt, so dass unerwünscht große Mengen der Reaktivverdünner benötigt werden. Darüberhinaus wirken (Meth)acrylmonomere häufig sensibilisierend.

Kombinationen von ungesättigten Polyestern und Vinylethern sind in WO 00/78833 für die Herstellung von Formkörpern beschrieben.

Strahlungshärtbare Beschichtungsmassen, welche Vinylether enthalten können, sind aus US 6063864, US 6470897 US 9942556, US 6617417, US 3347806, US 974892 und US 6489406 bekannt.

US 6063864 offenbart strahlungshärtbare Beschichtungsmassen, welche neben dem ungesättigten Polyesterharz zwingend Styrol und Vinylether enthalten.

US 5470 897 offenbart Beschichtungsmassen, welche (Meth)acrylmonomere oder Vinylether enthalten. In den Beispielen werden ausschließlich (Meth)acrylmonomere (1,4 Butandioldimethacrylat) eingesetzt. Die Mindestmenge der (Meth)acrylmonomeren beträgt 5 Gew.-%. Als Härtungsmethode ist in der Beschreibung alternativ zur thermischen Härtung auch die Strahlungshärtung genannt. Beschichtungsmittel, welche ungesättigte Polyester und Vinylether enthalten, und durch Bestrahlung mit reaktivem Licht gehärtet werden sind nicht zu entnehmen.

Aufgabe der vorliegenden Erfindung waren strahlungshärtbare Beschichtungsmassen auf Basis von ungesättigten Polyestern und Reaktivverdünnern, welche gute anwendungstechnische Eigenschaften aufweisen. Gleichzeitig sollen die verwendeten Reaktivverdünner das Polyesterharz möglichst gut lösen.

Demgemäß wurde die eingangs definierte Verwendung gefunden.

Unter den Begriffen ungesättigtes Polyesterharz, Vinylether und α-olefinisch ungesättigte Polycarbonsäuren oder deren Mono- oder Diester werden im nachfolgenden immer auch Gemische verschiedener ungesättigter Polyesterharze, bzw. Gemische verschiedener Vinylether und verschiedener α-olefinisch ungesättigte Polycarbonsäuren oder deren Mono- oder Diester verstanden.

Ungesättigte Polyesterharze a) sind Polyester von Polycarbonsäuren, vorzugsweise Dicarbonsäuren, und Polyolen, vorzugsweise Diolen, wobei zwingend mindestens eine α-olefinisch ungesättigte Polycarbonsäuren als Aufbaukomponente mitverwendet wird. Als α-olefinisch ungesättigte Polycarbonsäure in Betracht kommen insbesondere Maleinsäure, Fumarsäure, Itaconsäure, Mesaconsäure, Citraconsäure; die Verbindungen können bei der Veresterung, soweit möglich, auch als Anhydrid eingesetzt werden. Besonders bevorzugt ist Maleinsäure, welche insbesondere auch als Maleinsäureanhydrid verwendet wird

Neben einer α-olefinisch ungesättigte Polycarbonsäuren können die ungesättigten Polyesterharze weitere Polycarbonsäuren, bzw. deren Derivate wie Anhydride oder Ester niedrigmolekularer Monoalkohole als Aufbaukomponente enthalten. Genannt seien z.B. ortho-Phthalsäure, Isophthalsäure, Terephthalsäure, Trimellithsäure, Trimesinsäure, Pyromellithsäure, Tetrahydrophthalsäure, Hexahydrophthalsäure, Methylhexahydrophthalsäure, Endomethylenhexahydrophthalsäure, Dicyclopentandicarbonsäure, Bernsteinsäure, Glutarsäure, Adipinsäure, Pimelinsäure, Korksäure, Azelaïnsäure, Dodecandicarbonsäure, Dimerfettsäuren. Harzsäureaddukte mit Acrylsäure oder Maleïnsäure und auch Gemische solcher Polycarbonsäuren.

Reaktionspartner der Polycarbonsäuren sind Polyole, vorzugsweise Diole, wie zum Beispiel Ethylenglykol, Propylenglykol, Propandiol-1,3; 2-Methylpropandiol-1,3; Butandiol-1,4; Neopentylglykol; Ethylbutylpropandiol und weitere so genannte Neodiole (Dialkylpropandiole-1,3, Alkylphenylpropandiole-1,3); Hydroxypivalinsäure-Neopentylglykolester (HPN), Pentandiol-1,5; 2,2,4-Trimethylpentandiol-1,3; Hexandiol-1,6, Trimethylhexandiol, Dimerdiole, Dimethylolcyclohexan, Dimethyloltricyclodecan, Perhydro-Bisphenol A, ethoxyliertes Bisphenol A. Es können aber auch höherfunktionelle Polyole verwendet werden wie Glycerin, Trimethylolethan, Trimethylolpropan, DiTrimethylolpropan, Pentaerythrit, Di-Pentaerythrit, Trishydroxyethylisocyanurat.

Ungesättigte Polyester können auch Monocarbonsäuren als Aufbaukomponenten enthalten; diese befinden sich dann am Kettenende, da nur eine Veresterung möglich ist. Genant seien insbesondere 2-Ethylhexansäure, Isononansäure, Isodecansäure und weitere synthetisch nach der Koch- oder Oxosynthese hergestellte Monocarbonsäuren, Pelargonsäure, Destillationsschnitte von Kokosfettsäuren, Palmkernfettsäuren und Talg, oder auch ungesättigte Fettsäuren. Die Monocarbonsäuren werden üblicherweise in Verbindung mit höherfunktionellen Polyolen eingesetzt. Es können auch Mischungen verwendet werden. Eine besondere Ausführungsform ist die Verwendung von Glycidestern gesättigter Monocarbonsäuren, wobei durch die Glycidestergruppe später weitere Umsetzungen und die Anbindung weiterer Verbindungen möglich ist. Ungesättigte Polyesterharze können auch Hydroxycarbonsäuren bzw. ihre Derivate enthalten wie Hydroxypivalinsäure, Dimethylolpropionsäure, delta-Valerolacton, epsilon-Caprolacton, Hydroxystearinsäure.

Die ungesättigten Polyester haben vorzugsweise eine Säurezahl von 0 bis 40, bevorzugt von 10 bis 35 mg KOH/g; das zahlenmittlere Molekulargewicht beträgt vorzugsweise 450 bis 8000, bevorzugt 800 bis 3000 g/mol. Die Äquivalentmasse, bezogen auf den molaren Anteil der α-olefinischen Doppelbindung, beträgt vorzugsweise 170 bis 1100 bevorzugt 200 bis 800 g/mol; ausgehend vom Gehalt an α-olefinischen Doppelbindungen gibt die Äquivalentmasse die im Polyester enthaltene Gewichtsmenge an α-olefinisch ungesättigten Polycarbonsäuren pro Mol ungesättigter Polyester wieder.

Die ungesättigten Polyester können nach üblichen in der Literatur beschriebenen Verfahren hergestellt werden.

Die bei Normalbedingungen (20°C, 1 bar) flüssige Zusammensetzung enthält neben dem ungesättigten Polyesterharz zwingend Verbindungen b) mit Vinylethergruppen (kurz Vinylether).

Vorzugsweise handelt es sich bei den Vinylethern um Vinylether mit einer oder zwei Vinylethergruppen (Mono- oder Divinylether).

Das Molgewicht der Vinylether ist vorzugsweise kleiner 500 g/mol.

Besonders bevorzugt handelt es bei den Vinylethern b) um Divinylether oder Gemische von Divinylethern und Monovinylethern.

Insbesondere handelt es sich bei den Vinylethern um aliphatische oder cycloaliphatische Verbindungen, welche außer den Vinylethergruppen und gegebenenfalls weiteren Ethergruppen keine sonstigen funktionellen Gruppen enthalten.
Bei den Vinylethern (b) kann es sich z. B. um Reaktionsprodukte von verschiedenen Alkanolen (Monoalkohole und Polyole) mit Acetylen handeln. Als Monovinylether kommen insbesondere Ethylvinylether, Propylvinylether, n-Butylvinylether, Isobutylvinylether, tert.-Butylvinylether, 2-Ethylhexylvinylether, Dodecylvinylether, Octadecylvinylether, Cyclohexylvinylether, 4-Hydroxybutylvinylether, Monovinylether des Dimethylolcyclohexans in Betracht.
Als Vinylether von Polyolen, insbesondere Diolen, sind zum Beispiel zu nennen: Butandiol-1,4-divinylether, Ethylenglykoldivinylether, Diethylenglykoldivinylether, Triethylengykoldivinylether, Neopentylglykoldivinylether, Pentandiol-1,5-divinylether, Hexandiol-1,6-divinylether, Dimethylolcylohexandivinylether.

Der Gehalt der Vinylether in der flüssigen Zusammensetzung beträgt vorzugsweise 1 bis 100 Gew.-teile auf 100 Gew.-teile ungesättigtes Polyesterharz. Die Mindestmenge des Vinylethers beträgt besonders bevorzugt mindestens 5 Gew.-teile und ganz besonders bevorzugt mindestens 10 Gew.-teile auf 100 Gew.-teile Polyesterharz. Im Allgemeinen besonders bevorzugt beträgt der Gehalt an Vinylether maximal 50 Gew.-teile Vinylether auf 100 Gew.-teile Polyesterharz.

Die bei Normalbedingungen (20°C, 1 bar) flüssige Zusammensetzung enthält Verbindungen c). Bei Verbindungen c) handelt es sich um Maleinsäure und deren Mono- oder Diester, insbesondere mit aliphatischen Monoalkoholen, insbesondere C1 bis C10 Alkanole oder Cycloalkanole, wie Methanol, Ethanol, n-Propanol, Isopropanol, n-Butanol, Isobutanol, tert.-Butanol, Pentanol, Isoamylalkohole, n-Hexanol, 2-Ethylhexanol, Cyclohexanol, oder auch Alkoxygruppen enthaltende Ester von entsprechend alkoxylierten Alkoholen.

Bevorzugte Verbindungen c) sind Mono- oder Diester von Maleinsäure. Ganz besonders bevorzugt sind die Diester.

Die Menge der Bestandteile a), b) und c) der flüssigen Zusammensetzung wird so gewählt, dass die Summe der Doppelbindungen der α-olefinisch ungesättigten Polycarbonsäuren aus a) und gegebenenfalls der Verbindungen c) zu den Doppelbindungen der Vinylether b) im Molverhältnis 1,3 : 1 bis 0,8 : 1, vorzugsweise im Molverhältnis 1,2 : 1 bis 0,9 : 1 und besonders bevorzugt im Molverhältnis 1,1 : 1 bis 0,95 : 1 steht. In einer besonders bevorzugten Ausführungsform sind die Mengen equimolar.

Ausgehend von dem Gehalt der α-olefinisch ungesättigten Polycarbonsäuren in dem Polyester a) und der zugesetzten Menge an Vinylether b) wird dann die Menge der Verbindungen c) so gewählt, dass die vorstehende Bedingung erfüllt ist.

Vorzugsweise enthält die flüssige Zusammensetzung Verbindungen c). Der Gehalt der Verbindung c) beträgt dann insbesondere 1 bis 20 Gew.-teile auf 100 Gew.-teile ungesättigtes Polyesterharz.

Die flüssige Zusammensetzung kann außer den Verbindungen a), b) und c) weitere Bestandteile enthalten.

In Betracht kommen weitere filmbildende Bestandteile, die zusammen mit den Komponenten a), b) und c) als Bindemittel dienen und nach der Aushärtung einen zusammenhängenden Polymerfilm ausbilden.

Derartige filmbildende Bestandteile können insbesondere weitere Polymere, vorzugsweise strahlungshärtbare Polymere, z. B. solche mit Acrylgruppen, oder auch sonstige Reaktivverdünner sein.

Als weitere Reaktivverdünner exemplarisch genannt seien z. B. Vinylverbindungen wie N-Vinylcaprolactam, N-Vinylimidazol, N-Vinylpyrrolidon und Divinylethylenharnstoff.

In einer bevorzugten Ausführungsform handelt es sich bei mindestens 60 Gew.-%, insbesondere bei mindestens 80 Gew.-%, ganz besonders bevorzugt bei mindestens 95 Gew.-% aller filmbildenden Bestandteile der Zusammensetzung um ungesättigte Polyesterharze a), Vinylether b) und gegebenenfalls Verbindungen c).

Reaktivverdünner wie Styrol oder bei Raumtemperatur flüssige Monomere mit einer oder mehreren Acryl- oder Methacrylgruppen (Meth)acrylmonomere) werden in der flüssigen Zusammensetzung nicht benötigt.

Vorzugsweise enthält daher die flüssige Zusammensetzung weniger als 1 Gew.-% Styrol, insbesondere enthält sie kein Styrol.

Vorzugsweise enthält daher die flüssige Zusammensetzung weniger als 5 Gew.-%, insbesondere weniger als 2 Gew.-% (Meth)acrylmonomere; besonders bevorzugt enthält sie keine (Meth)acrylmonomere.

Als sonstige Bestandteile der Zusammensetzung kommen z.B. Photoinitiatoren, Pigmente, Additive zur Verbesserung des Applikationsverhaltens, der Filmbildung und der Stabilität der Filme, darunter auch geeignete UV-Absorber in Betracht.

Die Zusammensetzung kann auch Lösemittel, sei es Wasser oder organische Lösemittel enthalten. Im Rahmen der vorliegenden Erfindung werden jedoch derartige Lösemittel nicht zwingend benötigt; die gewünschten Viskositäten können ohne derartige Lösemittel eingestellt werden. Die Zusammensetzung enthält daher vorzugsweise weniger als 10 Gew.-%, insbesondere weniger als 5 Gew.-% und besonders bevorzugt weniger als 3 Gew.-% Wasser oder organischer Lösmittel. In einer besonders bevorzugten Ausführungsform enthält die Zusammensetzung kein Wasser oder organische Lösemittel.

Vorzugsweise erfolgt die Härtung der Zusammensetzung gemäß Ansprüche 16 und 17 durch Bestrahlung mit energiereichem Licht, insbesondere UV-Licht, um beschichtete Gegenstände zu erhalten.

Die Zusammensetzung enthält daher vorzugsweise Photoinitiatoren.

Für eine Vernetzung durch UV-Licht wird in einer bevorzugten Ausführungsform ein Gemisch aus 0,5 bis 5,0 % (bevorzugt 0,5 bis 3,0 %) bezogen auf die Summe der filmbildenden Bestandteile an radikalisch wirkenden UV-Initiatoren gegebenenfalls in Kombination mit UV-Sensibilisatoren und 0 bis 2 % an kationisch wirkenden UV-Initiatoren verwendet.

Radikalisch wirkende UV-Initiatoren sind z. B. Benzophenon, welche oft in Kombination tertiären Aminen als UV-Sensibilisator, z. B. N-Methyldiethanolamin, eingesetzt werden, Benzoinether, Benzil, Benzilketale, Hydroxyalkylphenone, α-Aminoalkylphenone, Mono- und Bis-Benzoylphosphinoxide.

Kationisch wirkende UV-Initiatoren sind zum Beispiel Aryldiazoniumsalze, Diaryljodiumsalze, Triarylsulfoniumsalze der Tetrafluorborsäure oder der Hexafluorphosphorsäure.

Für eine radikalisch initiierte Vernetzung ohne UV-Licht eignen sich die bekannten Peroxide als Initiatoren in Kombination mit Redox-Systemen wie Metallsalzen und tertiären Aminen als Beschleuniger zum Beispiel Methylethylketonperoxid und Kobalt-Octoat, oder Benzoylperoxid und Dimethylbenzylamin.

Vorzugsweise erfolgt die Härtung der flüssigen Zusammensetzung durch Bestrahlung mit energiereichem Licht. Dazu wird die Zusammensetzung auf die zu beschichtenden Oberflächen aufgebracht, anschließend erfolgt dann Härtung der Beschichtung durch Bestrahlung mit energiereichem Licht, vorzugsweise UV-Licht.

Die flüssige Zusammensetzung dient als Beschichtungsmittel gemäß Anspruch 18 für unterschiedlichste Oberflächen und Zwecke. Es können z. B. Oberflächen aus Holz, Papier, Kunststoff oder Metall beschichtet werden. Die Zusammensetzung dient z. B. als Lack, sei es als Korrosionsschutz, dekorativer Lack, Schutzlack, pigmentierte Lack oder Klarlack, oder als Druckfarbe.

Die erfindungsgemäße Zusammensetzung bzw. die erfindungsgemäße Verwendung erfüllt die gestellten Forderungen an eine hohe Reaktivität bei der Härtung. Eine UV-Härtung wird kaum durch Luftsauerstoff inhibiert. Es lassen sich hohe Schichtdicken einwandfrei und homogen vernetzen. Die Kombinationen der Filmbildner lassen sich auch für verschieden pigmentierte UV-Lacke verwenden.

Auch eine thermische Vernetzung mit üblichen radikalischen Initiatoren und Beschleunigern kann sehr effektiv durchgeführt werden.

Generell haben die Zusammensetzungen eine geringe Viskosität und geben nach der Härtung Beschichtungen mit guten anwendungstechnischen Eigenschaften, z. B. einer guten Elastizität, einer guten Haftung und einer guten Lösemittel- und Chemikalienbeständigkeit. Auf physiologisch bedenkliche Bestandteile wie Styrol kann verzichtet werden.

### Beispiele:

### 1. Herstellung und Lösung eines ungesättigten Polyesterharzes

In einen Laborreaktor mit regelbarer, elektrischer Widerstandsheizung; Produkttemperaturkontrolle; Schutzgaseinleitung; randgängigem, stufenlos regelbarem Rührer; Füllkörperkolonne mit Kopftemperaturmessung, aufsteigendem Wasserabscheider und Rückflusskühler, mit dem Wasserabscheider voll Schleppmittel (Cyclohexan) wurden 223,3 g (2,94 mol) Propandiol-1,2; 254,6 g (2,44 mol) Neopentylglykol; 239,9 g (2,44 mol) Maleinsäureanhydrid; 362,2 g (2,44 mol) Phthalsäureanhydrid, 0,05 g Hydrochinon als Inhibitor mit 20 g Cyclohexan als Schleppmittel eingewogen. Das Gemisch wurde unter Einleiten von Stickstoff als Schutzgas auf ca. 150°C aufgeheizt. Dann wurde die Temperatur langsam auf 180°C gesteigert, so dass Schleppmittel und abgespaltenes Wasser regelmäßig destillieren. Es wurde bei 180°C gehalten bis die Säurezahl des Reaktionsgemischs, ermittelt durch Titration einer Probe, gelöst in einem Gemisch aus vorneutralisiertem Ethanol und Xylol (2 : 1) [DIN 53169] mit 0,5 molarer alkoholischer Kalilauge gegen Phenolphthalein unter 35 mg KOH/g gefallen ist. Dann wurde der Laborreaktor auf kurzen Weg geschaltet (absteigende Destillationsbrücke) und Schleppmittel und restliches Wasser abdestilliert. Dann wurde abgekühlt. Das Polyesterharz hatte eine Säurezahl von 25 mg KOH/g und eine Viskosität von 2,2 Pa·s gemessen im Platte-Kegel-Viskosimeter bei 150°C und eine Äquivalentmasse von 442 g/mol.
Bei einer Temperatur von 90°C wurden dann 0,5 g Hydrochinon, gelöst in einer kleinen Menge Ethanol, zugegeben und dann die Schmelze des ungesättigten Polyesterharzes in 330 g Butandiol-1,4-divinylether (Äquivalentmasse 71 g/mol, Molgewicht 142 g/mol) gelöst, die Temperatur wurde dabei unter 60°C gehalten. Es wird dann weiter gekühlt. Es resultiert eine 75 %-ige Lösung des ungesättigten Polyesters in Vinylether, mit einer Viskosität von 39 Pa·s gemessen im Platte-Kegel-Viskosimeter bei 23°C, die ausreichend lagerstabil ist.

### 2. Herstellung eines Beschichtungsmittels für die UV-Vernetzung

Zu 200 g der Lösung des nach Beispiel 1 hergestellten ungesättigten Polyesterharzes (das sind 0,34 Äquivalente) in Butandioldivinylether das sind 0,70 Äquivalente) werden mit 50 g Diethylmaleinat (das sind 0,29 Äquivalente, jeweils bezogen auf die Anteile an ungesättigten Gruppen) gemischt. Das Äquivalentverhältnis der Summe der Maleinsäureester zu den Äquivalenten des Vinylethers beträgt 0,9 / 1,0. Es werden dann 5 g eines handelsüblichen radikalisch wirkenden UV-Initiators (Irgacure 500 von Ciba Spezialitätenchemie, eine Mischung aus 50 % 1-Hydroxycyclohexylphenylketon und 50 % Benzophenon) und 0,12 g eines handelsüblichen, kationisch wirkenden UV-Initiators (Irgacure 250 von Ciba Spezialitätenchemie, ein 4-Methylphenyl-4-(2-methylpropyl)phenyl-jodonium hexafluorophosphat) zugesetzt. Das Beschichtungsmittel hat eine Viskosität von 0,51 Pa·s (Platte-Kegel-Viskosimeter bei 26,5°C) bei einer Konzentration des Polyesters von 60 Gew-%.

### 3. Vergleichsbeispiel

Löst man das im Beispiel 1 beschriebene ungesättigte Polyesterharz in einem für UV-Lacke gebräuchlichen reaktivem Verdünner, hier wurde Tripropylenglykoldiacrylat verwendet, so resultieren bei einer 70 %-igen Lösung eine Viskosität von 26 Pa·s und bei einer 60 %-igen Lösung eine Viskosität von 7 Pa·s (Platte-Kegel-Viskosimeter); also weitaus höhere Viskositäten

### 4. Applikation

Das im Beispiel 2 beschriebene Beschichtungsmittel wurde mit Rakeln auf Glasplatten appliziert, Schichtdicke 100 µm Nassfilm, und dann auf einer Laboranlage für UV-Härtung Aktiprint Mini mit einer Quecksilberlampe und einer Leistung von 80 W/cm und einem Vorschub von 2 m/min bei 5 und 10 Durchläufen gehärtet. Die Beschichtung war vollständig ausgehärtet und hatte gute anwendungstechnische Eigenschaften.

## Patentansprüche

1. Verwendung einer bei Normalbedingungen (20°C, 1 bar) flüssigen Zusammensetzung als Beschichtungsmittel, **dadurch gekennzeichnet, dass** die Zusammensetzung
a) ein ungesättigtes Polyesterharz, aufgebaut aus α-olefinisch ungesättigten Polycarbonsäuren, Polyolen und gegebenenfalls weiteren Verbindungen
b) Verbindungen mit Vinylethergruppen (kurz Vinylether) und
c) Maleinsäure, Maleinsäuremonoester oder Maleinsäurediester enthält, wobei
die Summe der Doppelbindungen der α-olefinisch ungesättigten Polycarbonsäuren aus a) und der Verbindungen c) zu den Doppelbindungen der Vinylether b) im Molverhältnis 1,3 : 1 bis 0,8 : 1 steht.

2. Verwendung gemäß Anspruch 1, **dadurch gekennzeichnet, dass** die flüssige Zusammensetzung weniger als 1 Gew. % Styrol enthält.

3. Verwendung gemäß Anspruch 1 oder 2, **dadurch gekennzeichnet, dass** die Zusammensetzung weniger als 5 Gew. % (Meth)acrylmonomere enthält.

4. Verwendung gemäß einem der Ansprüche 1 bis 3, **dadurch gekennzeichnet, dass** das ungesättigte Polyesterharz aus α-olefinisch ungesättigten Polycarbonsäuren, Polyolen und gegebenenfalls gesättigten Polycarbonsäuren und gegebenenfalls Monocarbonsäuren besteht und eine Säurezahl von 0 bis 40 mg KOH/g Polyesterharz (gemäß das Verfahren in der Beschreibung) hat.

5. Verwendung gemäß einem der Ansprüche 1 bis 4, **dadurch gekennzeichnet, dass** es sich bei der Polycarbonsäure in a) um Maleinsäure und bei der Verbindung c) um Maleinsäure, Maleinsäuremonoester oder Maleinsäurediester handelt

6. Verwendung gemäß einem der Ansprüche 1 bis 5, **dadurch gekennzeichnet, dass** es sich bei den Vinylethern um Mono- oder Divinylether mit einem Molgewicht kleiner 500 g/mol handelt.

7. Verwendung gemäß einem der Ansprüche 1 bis 6 **dadurch gekennzeichnet, dass** es sich bei den Vinylethern um mindestens einen Divinylether, gegebenenfalls mit Gemisch mit anderen Vinylethern, handelt.

8. Verwendung gemäß einem der Ansprüche 1 bis 7, **dadurch gekennzeichnet, dass** es sich bei den Vinylethern um aliphatische oder cycloaliphatische Verbindungen handelt, welche außer den Vinylethergruppen und gegebenenfalls weiteren Ethergruppen keine sonstigen funktionellen Gruppen enthalten.

9. Verwendung gemäß einem der Ansprüche 1 bis 8, **dadurch gekennzeichnet, dass** der Gehalt der Vinylether 1 bis 100 Gew. teile auf 100 Gew. teile ungesättigtes Polyesterharz beträgt.

10. Verwendung gemäß einem der Ansprüche 1 bis 9, **dadurch gekennzeichnet, dass** die flüssige Zusammensetzung mindestens eine Verbindung c) enthält.

11. Verwendung gemäß einem der Ansprüche 1 bis 10, **dadurch gekennzeichnet, dass** der Gehalt der Verbindung c) 1 bis 20 Gew. teile auf 100 Gew. teile ungesättigtes Polyesterharz beträgt.

12. Verwendung gemäß einem der Ansprüche 1 bis 11, **dadurch gekennzeichnet, dass** es sich bei mindestens 80 Gew. % aller filmbildenden Bestandteile der Zusammensetzung um ungesättigten Polyesterharze a), Vinylether b) und gegebenenfalls Verbindungen c) handelt.

13. Verwendung gemäß einem der Ansprüche 1 bis 12, **dadurch gekennzeichnet, dass** die Zusammensetzung Photoinitiatoren enthält.

14. Verwendung gemäß einem der Ansprüche 1 bis 13, **dadurch gekennzeichnet, dass** die Zusammensetzung weniger als 5 Gew. % Wasser oder organischer Lösmittel enthält.

15. Verfahren zur Beschichtung von Oberflächen, **dadurch gekennzeichnet, dass** die Zusammensetzung gemäß einem der Ansprüche 1 bis 14 auf die zu beschichtenden Oberflächen aufgebracht wird und anschließend eine Härtung durch Bestrahlung mit energiereichem Licht erfolgt.

16. Beschichtete Gegenstände erhältlich durch ein Verfahren gemäß Anspruch 15.

17. Beschichtungsmittel, enthaltend
a) eine ungesättigtes Polyesterharz, aufgebaut aus α-olefinisch ungesättigten Polycarbonsäuren, Polyolen und gegebenenfalls weiteren Verbindungen
b) Verbindungen mit Vinylethergruppen (kurz Vinylether) und
c) Maleinsäure, Maleinsäuremonoester oder Maleinsäurediester
wobei
die Summe der Doppelbindungen der α-olefinisch ungesättigten Polycarbonsäuren aus a) und der Verbindungen c) zu den Doppelbindungen der Vinylether b) im Molverhältnis 1,3 : 1 bis 0,8 : 1 steht.

## Claims

1. The use of a composition which is liquid under standard conditions (20°C, 1 bar) as a coating material, wherein the composition comprises
a) an unsaturated polyester resin composed of α-olefinically unsaturated polycarboxylic acids, polyols, and optionally further compounds,
b) compounds with vinyl ether groups (vinyl ethers for short), and
c) maleic acid, maleic monoesters or maleic diesters,
where
the sum of the double bonds of the α-olefinically unsaturated polycarboxylic acids from a) and of the compounds c) to the double bonds of the vinyl ethers b) is in a molar ratio of 1.3:1 to 0.8:1.

2. The use as claimed in claim 1, wherein the liquid composition comprises less than 1% by weight of styrene.

3. The use as claimed in claim 1 or 2, wherein the composition comprises less than 5% by weight of (meth)acrylic monomers.

4. The use as claimed in any of claims 1 to 3, wherein the unsaturated polyester resin is composed of α-olefinically unsaturated polycarboxylic acids, polyols, and optionally saturated polycarboxylic acids, and optionally monocarboxylic acids, and has an acid number of 0 to 40 mg KOH/g polyester resin (as per the method in the description).

5. The use as claimed in any of claims 1 to 4, wherein the polycarboxylic acid in a) is maleic acid and the compound c) comprises maleic acid, maleic monoesters or maleic diesters.

6. The use as claimed in any of claims 1 to 5, wherein the vinyl ethers are monovinyl or divinyl ethers having a molar weight of less than 500 g/mol.

7. The use as claimed in any of claims 1 to 6, wherein the vinyl ethers comprise at least one divinyl ether, optionally with a mixture with other vinyl ethers.

8. The use as claimed in any of claims 1 to 7, wherein the vinyl ethers are aliphatic or cycloaliphatic compounds which apart from the vinyl ether groups and optionally other ether groups contain no other functional groups.

9. The use as claimed in any of claims 1 to 8, wherein the amount of the vinyl ethers is 1 to 100 parts by weight per 100 parts by weight of unsaturated polyester resin.

10. The use as claimed in any of claims 1 to 9, wherein the liquid composition comprises at least one compound c).

11. The use as claimed in any of claims 1 to 10, wherein the amount of the compound c) is 1 to 20 parts by weight per 100 parts by weight of unsaturated polyester resin.

12. The use as claimed in any of claims 1 to 11, wherein at least 80% by weight of all of the film-forming constituents of the composition are unsaturated polyester resins a), vinyl ethers b), and optionally compounds c).

13. The use as claimed in any of claims 1 to 12, wherein the composition comprises photoinitiators.

14. The use as claimed in any of claims 1 to 13, wherein the composition comprises less than 5% by weight of water or organic solvents.

15. A method for coating surfaces, which comprises applying the composition as claimed in any of claims 1 to 14 to the surfaces to be coated and subsequently curing by irradiation with high-energy light.

16. A coated article obtainable by a method as claimed in claim 15.

17. A coating material comprising
a) an unsaturated polyester resin composed of α-olefinically unsaturated polycarboxylic acids, polyols, and optionally further compounds,
b) compounds with vinyl ether groups (vinyl ethers for short), and
c) maleic acid, maleic monoesters or maleic diesters,
where
the sum of the double bonds of the α-olefinically unsaturated polycarboxylic acids from a) and of the compounds c) to the double bonds of the vinyl ethers b) is in a molar ratio of 1.3:1 to 0.8:1.

## Revendications

1. Utilisation d'une composition liquide dans les conditions normales (20°C, 1 bar) comme agent de revêtement, **caractérisée en ce que** la composition contient
a) une résine de polyester insaturé, constituée par des acides polycarboxyliques oléfiniquement insaturés en position α, des polyols et le cas échéant d'autres composés,
b) des composés présentant des groupes vinyléther (en abrégé vinyléthers) et
c) de l'acide maléique, des monoesters ou des diesters de l'acide maléique,
la somme des doubles liaisons des acides polycarboxyliques oléfiniquement insaturés en position α de a) et des composés c) et des doubles liaisons des vinyléthers b) se trouvant dans un rapport molaire de 1,3:1 à 0,8:1.

2. Utilisation selon la revendication 1, **caractérisée en ce que** la composition liquide contient moins de 1% en poids de styrène.

3. Utilisation selon la revendication 1 ou 2, **caractérisée en ce que** la composition contient moins de 5% en poids de monomères de (méth)acryle.

4. Utilisation selon l'une quelconque des revendications 1 à 3, **caractérisée en ce que** la résine de polyester insaturé est constituée par des acides polycarboxyliques oléfiniquement insaturés en position α, des polyols et le cas échéant par des acides polycarboxyliques saturés et le cas échéant par des acides monocarboxyliques et présente un indice d'acide de 0 à 40 mg de KOH/g de polyester (selon le procédé dans la description).

5. Utilisation selon l'une quelconque des revendications 1 à 4, **caractérisée en ce qu'**il s'agit, pour l'acide polycarboxylique dans a), d'acide maléique et, pour le composé c), d'acide maléique, de monoesters d'acide maléique ou de diesters d'acide maléique.

6. Utilisation selon l'une quelconque des revendications 1 à 5, **caractérisée en ce qu'**il s'agit, pour les vinyléthers, de monovinyléthers ou de divinyléthers présentant un poids moléculaire inférieur à 500 g/mole.

7. Utilisation selon l'une quelconque des revendications 1 à 6, **caractérisée en ce qu'**il s'agit, pour les vinyléthers, d'au moins un divinyléther, le cas échéant en mélange avec d'autres vinyléthers.

8. Utilisation selon l'une quelconque des revendications 1 à 7, **caractérisée en ce qu'**il s'agit, pour les vinyléthers, de composés aliphatiques ou cycloaliphatiques, qui ne contiennent, outre les groupes vinyléther et le cas échéant d'autres groupes éther, pas d'autres groupes fonctionnels.

9. Utilisation selon l'une quelconque des revendications 1 à 8, **caractérisée en ce que** la teneur en vinyléthers est de 1 à 100 parties en poids pour 100 parties en poids de résine de polyester insaturé.

10. Utilisation selon l'une quelconque des revendications 1 à 9, **caractérisée en ce que** la composition liquide contient au moins un composé c).

11. Utilisation selon l'une quelconque des revendications 1 à 10, **caractérisée en ce que** la teneur en composé c) est de 1 à 20 parties en poids pour 100 parties en poids de résine de polyester insaturé.

12. Utilisation selon l'une quelconque des revendications 1 à 11, **caractérisée en ce qu'**il s'agit, pour au moins 80% en poids de tous les constituants filmogènes de la composition, de résines de polyester insaturé a), de vinyléthers b) et le cas échéant de composés c).

13. Utilisation selon l'une quelconque des revendications 1 à 12, **caractérisée en ce que** la composition contient des photo-initiateurs.

14. Utilisation selon l'une quelconque des revendications 1 à 13, **caractérisée en ce que** la composition contient moins de 5% en poids d'eau ou de solvants organiques.

15. Procédé pour le revêtement de surfaces, **caractérisé en ce que** la composition selon l'une quelconque des revendications 1 à 14 est appliquée sur les surfaces à revêtir et on réalise ensuite un durcissement par irradiation par de la lumière riche en énergie.

16. Objets revêtus pouvant être obtenus par un procédé selon la revendication 15.

17. Agent de revêtement, contenant
a) une résine de polyester insaturé, constituée par des acides polycarboxyliques oléfiniquement insaturés en position α, des polyols et le cas échéant d'autres composés,
b) des composés présentant des groupes vinyléther (en abrégé vinyléthers) et
c) de l'acide maléique, des monoesters ou des diesters de l'acide maléique,
la somme des doubles liaisons des acides polycarboxyliques oléfiniquement insaturés en position α de a) et des composés c) et des doubles liaisons des vinyléthers b) se trouvant dans un rapport molaire de 1,3:1 à 0,8:1.
